# EUROPEAN PATENT APPLICATION

(11) **EP 1 426 712 A1**
(43) Date of publication of application: **09.06.2004**
(21) Application number: 02026110.3
(22) Date of filing: 22.11.2002
(51) Int. Cl.: F25B 39/04

(54) **Refrigerator having vortex type condenser**

(71) Applicant: Kanao, Mituhiro, Kure-Shi, 737-0935, Hiroshima-ken (JP)
(72) Inventor: Kanao, Mituhiro, Kure-Shi, 737-0935, Hiroshima-ken (JP)
(74) Representative: Viering, Jentschura & Partner

(57) **Abstract**

It is an object of the present invention to obtain a condenser without hot blow air generation.

When a swirling flow (vortex) is imparted to the thermal energy of a refrigerant gas compressed by the compressor of a refrigerator and containing compression heat by the nozzle (3) and the ring shape groove (4) provided on the lid (2) of the cylindrical vessel (1), the outer shell of the swirling flow of refrigerant gas is transformed into an energy of revolution speed and cooled and in the course of leading to the center of the swirling flow, the energy of velocity is reduced and decompressed and the refrigerant gas is condensed and liquefied in the central (core) portion of the swirling flow (circular motion). The decompression effect generated by the swirling flow is a basic principle of the labyrinth effect, and the swirling flow of gas corresponds to the atomic drag.

## Description

### BACKGROUND OF THE INVENTION

### Field of the Invention

The present invention concerns a condenser for refrigerator.

### Detailed Description of the Prior Art

Condenser-liquefier for hot and high pressure refrigerant gas discharged from a conventional condenser for refrigerator can be classified roughly into air cooled type and water cooled type. All of these condensers are as much methods for condensing and liquefying indirectly a refrigerant gas flown in the metal coiled pipe by refrigerating the outside of coiled pipe through air or water and not methods for refrigerating, decompressing, condensing and liquefying hot refrigerant gas by condensing and liquefying function of the refrigerant gas itself by imparting changes to the flow of the refrigerant gas itself as in the present invention.

A household cooler actually requires about 1 HP (750w), and a huge number of coolers used all over the country discharge from the condenser thereof such a huge compression heat that would cause the temperature increase in urban areas. In fact, in order to obtain a slight cool air, a compressor heated by compression heat and compressed to a high pressure using a huge electricity (accelerated heat) is driven, and the condenser heated by compression heat is cooled by using a huge electricity. Except for certain water cooled type condensers, air cooled type condensers make a temporary temperature increase in urban area inevitable. On the other hand, in case of vehicle, a cooler of further higher horse power is loaded and the vehicle travels using a huge quantity of fuel and spewing a large quantity of hot blow air.

### SUMMARY OF THE INVENTION

It is an object of the present invention to consume compression heat discharged from the compressor of a refrigerator.

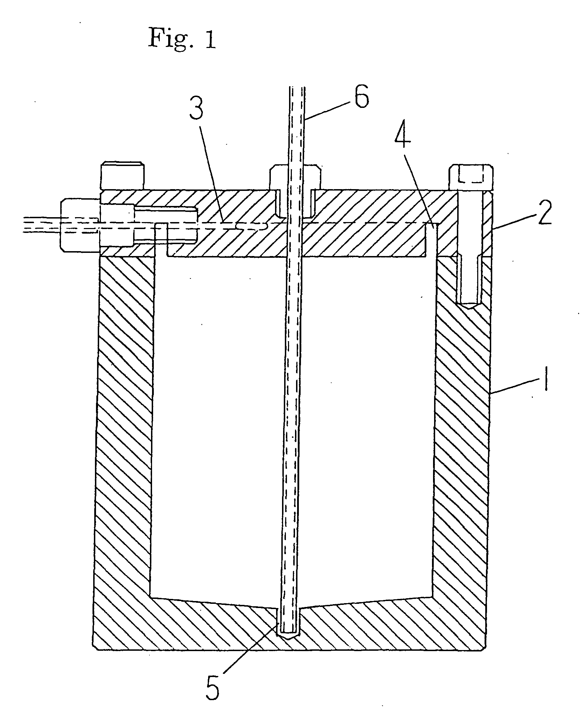

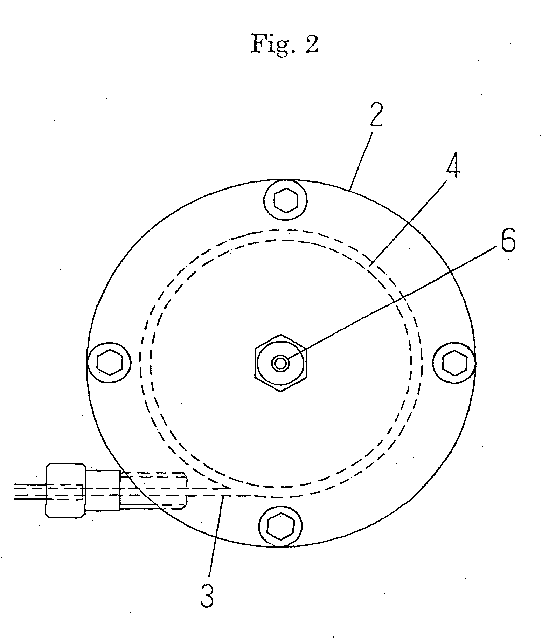

Compression heat contained in the discharge refrigerant is consumed by making a hot and high pressure refrigerant gas discharged from a compressor a spray refrigerant having swirling flow. As shown in FIG. 1 and FIG. 2, the refrigerant gas highly heated and pressurized by compression heat is cooled, decompressed, condensed and liquefied by the swirling flow (vortex flow) of refrigerant gas generated by refrigerant gas blown into a nozzle 3 and a ring shape groove 4 provided on a side face of a lid 2 of a cylindrical vessel 1. At the same time, refrigerant liquid accumulated in a liquid reservoir groove 5 provided at the center of the bottom of the cylindrical vessel 1 is delivered to a nozzle of a multi-stage vortex type condenser via a conduct pipe 6 provided at the center of the lid 2 of the cylindrical vessel 1 and, thereafter, stage to the nozzle (expansion valve) for an evaporator from the conduct pipe of the vortex type condenser in the last.

When a swirling flow (vortex) is imparted to the thermal energy of a refrigerant gas compressed by the compressor of a refrigerator and containing compression heat by the nozzle 3 and the ring shape groove 4 provided on the lid 2 of the cylindrical vessel 1, the outer shell of the swirling flow of refrigerant gas is transformed into an energy of revolution speed and cooled and in the course of leading to the center of the swirling flow, the energy of velocity is reduced and decompressed and the refrigerant gas is condensed and liquefied in the central (core) portion of the swirling flow (circular motion). The decompression effect generated by the swirling flow is a basic principle of the labyrinth effect, and the swirling flow of gas corresponds to the atomic drag.

The vortex type condenser of the present invention has a distinguished refrigerating capacity. Being heat consumptive method, air cooled or water cooled gear becomes unnecessary. As hot blow air is not generated, an integrated cooler can be obtained. A midget cooler (100w class) or an electric refrigerator can be obtained. As compression heat is consumed, the load on the compressor is reduced allowing to realize a huge energy saving. Not being heat dispersion method, the problem of warming is resolved.

### BRIEF DESCRIPTION OF THE DRAWINGS

FIG. 1 is a side cross-section of the vortex type condenser of the present invention;
FIG. 2 is a front view of FIG. 1; and

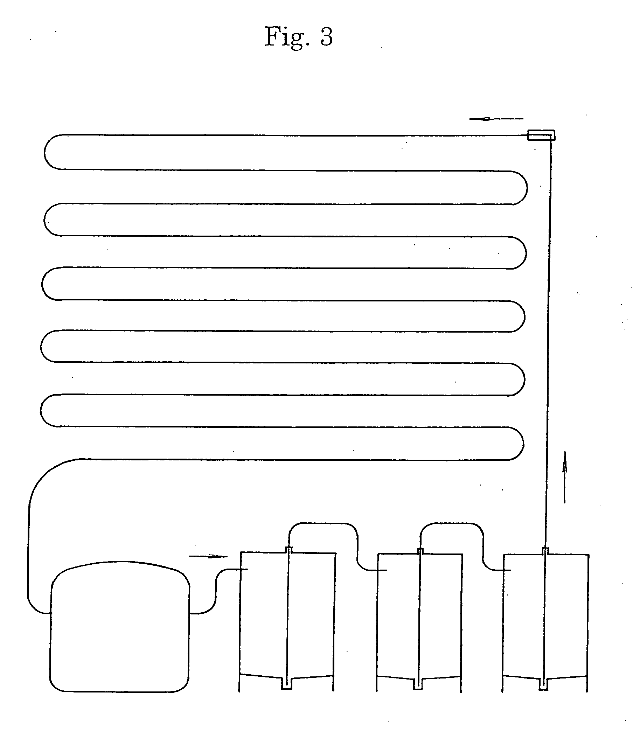

FIG. 3 is a reference drawing of an embodiment of freezing apparatus using the vortex type condenser of the present invention.

### DETAILED DESCRIPTION OF THE PREFERRED EMBODIMENT

### [Embodiment]

Based on the present invention, three units of vortex type condensers were manufactured. Then the three units were connected to perform experiments and, thereby, a cooler of extremely low heat generation was made.

| | |
|---|---|
| Specifications of refrigerator comprising three units of embodied vortex type condensers Inner diameter and depth of cylindrical vessel in the first stage | 100×110 millimeter |
| Nozzle caliber of vortex type condenser in the first stage | 2.4 millimeter |
| Inner diameter of duct provided at the center portion of cylindrical vessel in the first stage | 2.4 millimeter |
| Inner diameter and depth of cylindrical vessel in the second stage | 60×90 millimeter |
| Nozzle caliber of vortex type condenser in the second stage | 1.5 millimeter |
| Inner diameter of a duct provided at the center portion of cylindrical vessel in the second stage | 2.4 millimeter |
| Inner diameter and depth of cylindrical vessel in the third stage | 60×110 millimeter |
| Nozzle caliber of vortex type condenser in the third stage | 1.0 millimeter |
| Inner diameter of duct provided at the center portion of cylindrical vessel in the third stage | 2.4 millimeter |

Refrigerator used for the present embodiment

| Completely sealed type compressor for household electric refrigerator | |
|---|---|
| Electric power of compressor | 110W |
| Inner diameter of coiled pipe of evaporator | 6 millimeter |
| Width of coiled pipe | 240×240 (millimeter) |
| Type of nozzle for evaporator | Swirling flow type |
| Caliber of nozzle for evaporator | 0.35 millimeter |

| Data of Embodiment | |
|---|---|
| Temperature of casing for compressor | 37°C |
| Temperature of vortex type condenser in the first stage | 44°C |
| Temperature of vortex type condenser in the second stage | 40°C |
| Temperature of vortex type condenser in the third stage | 38°C |
| Pressure of vortex type condenser in the first stage | 11.5 kg/cm² |
| Pressure of vortex type condenser in the second stage | 11.5 kg/cm |
| Pressure of vortex type condenser in the third stage | 11.5 kg/cm |
| Low pressure side pressure (gauge pressure) | 0.25 kg/cm |

### Freezing effect of Embodiment

Fog was generated all over the coiled pipe type evaporator with fin (sustained)

(conditions) atmospheric temperature 220 fine weather, no blow, continuous operation,

Consumption of refrigerant 134a 110g

## Claims

1. A refrigerator having one or more vortex type condenser(s), comprising a nozzle (3) and a ring shape groove (4) disposed on a side face of a lid (2) of a cylindrical vessel (1) for generating a swirling flow in the cylindrical vessel (1), a liquid reservoir groove (5) disposed at the center of the bottom of said cylindrical vessel (1) and a conduct pipe (6) disposed at the center of the lid (2) for delivering refrigerant liquid accumulated in the liquid reservoir groove (5) to another apparatus, wherein a refrigerant gas is cooling, decompressed, condensed and liquefied by the swirling flow of the refrigerant gas generated by blowing the refrigerant gas discharged from the nozzle (3) of the cylindrical vessel (1) into the cylindrical vessel (1).
